# EUROPÄISCHE PATENTSCHRIFT

(11) **EP 1 957 309 B1**
(45) Veröffentlichungstag und Bekanntmachung des Hinweises auf die Patenterteilung: **01.08.2012**
(21) Anmeldenummer: 06851369.6
(22) Anmeldetag: 13.11.2006
(51) Int. Cl.: B60K 28/06, B62D 15/02, G08B 21/06

(54) **VERFAHREN UND VORRICHTUNG ZUR FAHRERZUSTANDSERKENNUNG**
METHOD AND DEVICE FOR RECOGNISING THE STATE OF A DRIVER
PROCÉDÉ ET DISPOSITIF POUR IDENTIFIER L'ÉTAT D'UN CONDUCTEUR

(30) Priorität: 01.12.2005 DE 102005057267
(43) Veröffentlichungstag der Anmeldung: 20.08.2008
(73) Patentinhaber: Robert Bosch GmbH, 70442 Stuttgart (DE)
(72) Erfinder: ALTMUELLER, Tobias, 70197 Stuttgart (DE); SCHMITZ, Carsten, 88142 Wasserburg (DE)
(86) Internationale Anmeldenummer: PCT/EP2006/068401
(87) Internationale Veröffentlichungsnummer: WO 2007/147444

(56) Entgegenhaltungen:
- DE-A1- 10 000 473
- DE-A1- 19 602 766
- DE-A1- 19 720 626
- US-A1- 4 509 040

## Beschreibung

### Stand der Technik

Die Erfindung betrifft ein Verfahren und eine Vorrichtung zur Fahrerzustandserkennung.

Die DE 102 10 130 A1 beschreibt ein Verfahren und eine Vorrichtung zur Fahrerwarnung, bei welchem ein Aufmerksamkeitsgrad bzw. Unaufmerksamkeitsgrad des Fahrers berücksichtigt wird. Dieser Aufmerksamkeitsgrad, d.h. der Fahrerzustand, wird abgeleitet aus dem Lenkwinkel, insbesondere aus der Änderung des Lenkwinkels, z.B. des Gradienten und/oder der Frequenz der Winkeländerungen und/oder des Abstandes aufeinander folgender Lenkwinkeländerungen. Darüber hinaus sind weitere Einflussgrößen zur Erkennung des Fahrerzustandes beschrieben wie beispielsweise die Gaspedalstellung und ihre Änderung.

In der DE 102 38 324 A1 wird eine Vorgehensweise zur Fahrerzustandserkennung beschrieben, bei welcher Lenkwinkeldaten und Daten einer Fahrspurerkennung berücksichtigt werden. Eine verringerte Fahreraufmerksamkeit wird anhand der Überwachung des Lenkradwinkels auf einen vorgegebenen Grenzwinkel, durch Überwachung der Drehgeschwindigkeit, mit der der Fahrer das Lenkrad dreht und eine Überwachung des Abstandes des Fahrzeugs zu den Fahrbahnbegrenzungslinien auf einen vorgegebenen Grenzwert beschrieben. Ferner werden auch die Häufigkeit und die Dauer von Ruhezuständen des Fahrers, in denen dieser keinen Lenkeingriff vornimmt, berücksichtigt.

Die DE 19602766 A1 zeigt verschiedene Vorgehensweisen nach dem Oberbegriff des Anspruchs 1 zur Ermittlung, ob ein Fahrer unaufmerksam ist oder nicht. Dazu werden verschiedene Fahrzeugdaten herangezogen. Grundsätzlich wird zunächst ein Referenzwert für das Fahrverhalten bei aufmerksamen Fahren ermittelt und dieser Referenzwert im Folgenden mit aktuellen Werten verglichen, um bei Abweichungen einen unaufmerksamen Fahrer zu erkennen. Es wird zum einen ein Betätigungsmuster des Lenkrads anhand eines Lenkwinkelsignals ermittelt, zum anderen in einer anderen Ausführung der laterale Abstand des Fahrzeugs zu den Fahrspurrandmarkierungen. Diese beiden Maßnahmen können auch in Kombinationen angewendet werden.

Die DE 100 00 473 A1 beschreibt ein Fahrer-Alarmierungssystem, das ausgebildet ist, einen durch ein Telefongespräch abgelenkten Fahrer zu erkennen. Hierzu erkennt das System, ob ein Anruf vorgenommen oder angenommen wird, und eine plötzliche große Änderung einer Fahrgeschwindigkeit oder Fahrrichtung auf einen unaufmerksamen Fahrer schließen lässt. In diesem Fall wird ein Warnsignal ausgegeben. Die DE 100 00 473 A1 offenbart ein Verfahren nach dem Oberbegriff des Anspruchs 1.

### Offenbarung der Erfindung

Eine deutliche Verbesserung der Fahrerzustandserkennung wird dadurch erreicht, dass nicht nur die Überwachung von vorgegebenen Grenzwerten von einzelnen Signalen vorgenommen wird, sondern dass der Fahrerzustand auf der Basis des Verlaufs innerhalb eines einzelnen Signals bestimmt wird.

Besonders vorteilhaft ist die Anwendung dieser Vorgehensweise auf die Auswertung des Lenkwinkels zur Fahrerzustandserkennung. Durch Überwachung des Verlaufs der Lenkwinkelgeschwindigkeit wird die Fahrerzustandserkennung weiter verbessert. Insbesondere wenn die Lenkwinkelgeschwindigkeit zunächst nahe Null mit anschließender Lenkkorrektur und einer Lenkgeschwindigkeit größer als ein bestimmter Grenzwert erkannt wurde. In diesem Fällen wird von einer Unaufmerksamkeit des Fahrers ausgegangen.

Besonders vorteilhaft ist die zusätzliche Berücksichtigung der Häufigkeit und Güte von Fahrfehlern, insbesondere Spurübertretungen und/oder des generellen Spurverhaltens des Fahrers.

Von besonderem Vorteil ist, dass mit der aufgezeigten Methode zur Fahrerzustandserkennung nicht nur Unaufinerksamkeitszustände in Folge von Müdigkeit, sondern auch Unaufmerksamkeitszustände durch Alkohol- oder Drogeneinfluss erkannt werden können.

Die Verwendung der Fahrerzustandsinformation ist vorteilhaft in einer Vielzahl von Fahrerassistenzsystemen.

Weitere Vorteile ergeben sich aus der nachfolgenden Beschreibung von Ausführungsbeispielen bzw. aus den abhängigen Patentansprüchen.

Die Erfindung wird nachstehend anhand der in der Zeichnung dargestellten Ausführungsformen näher erläutert.

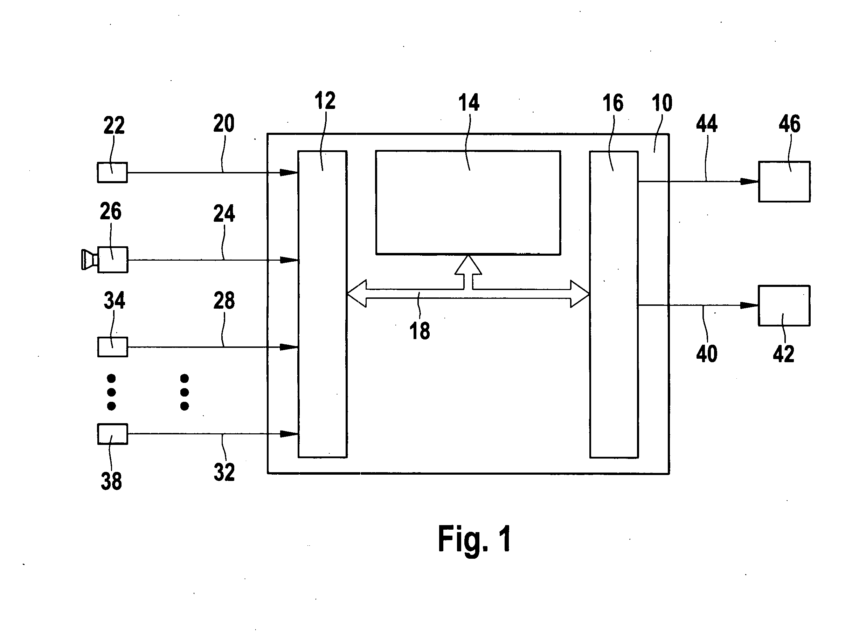

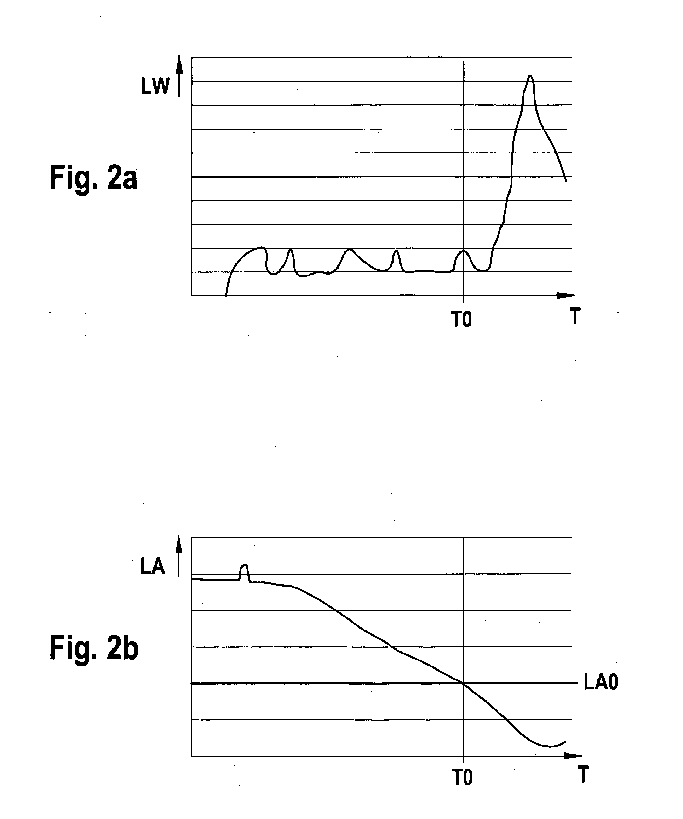

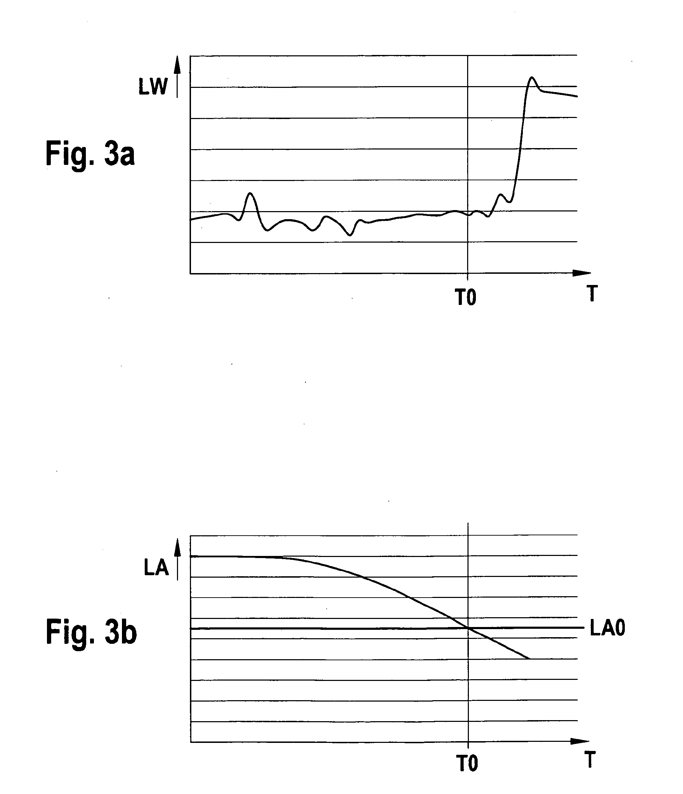

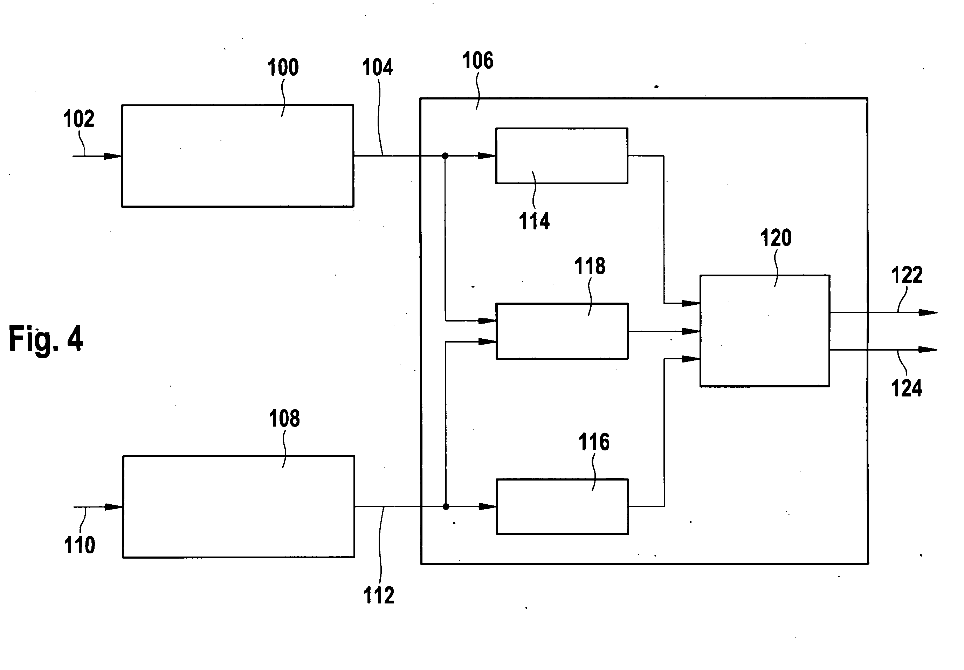

Figur 1 zeigt eine Vorrichtung zur Fahrerzustandserkennung während in den Figuren 2 und 3 die Verläufe von Signalen dargestellt sind, anhand derer die Vorgehensweise zur Fahrerzustandserkennung erläutert ist. Figur 4 schließlich zeigt ein Ablaufdiagramm, welches das Verfahren zur Fahrerzustandserkennung in der Realisierung als Rechnerprogramm skizziert.

Figur 1 zeigt eine Vorrichtung zur Fahrerzustandserkennung. Wesentliche Bestandteile sind dabei eine elektronische Steuereinheit 10, die im Wesentlichen aus Komponenten wie Eingangsschaltung 12, Rechner 14 und Ausgangsschaltung 16 besteht. Diese Komponenten sind mit einem Bussystem 18 zum gegenseitigen Informations- und Datenaustausch verbunden. An die Eingangsschaltung 12 sind, vorzugsweise über ein Bussystem, verschiedene Sensoren angeschlossen. Im Zusammenhang mit der nachfolgend beschriebenen Vorgehensweise werden nur die dafür wesentlichen Sensoren beschrieben. Über eine Zuleitung 20 wird ein Lenkwinkelsensor 22 an die Eingangsschaltung 12 angebunden. Über eine weitere Eingangsleitung 24 wird eine Videokamera 26, die Basis zur Erkennung von Fahrbahnrandmarkierungen ist, mit der Eingangsschaltung 12 verbunden. Weiterhin sind über Eingangsleitungen 28 bis 32 weitere Sensoren 34 bis 38, deren Signale im Zusammenhang mit der nachfolgend beschriebenen Vorgehensweise wesentlich sind, angebunden. Über die Ausgangsschaltung 16 werden Informationen ausgegeben, beispielsweise über eine Ausgangsleitung 40, eine Warnlampe 42 bzw. ein Informations-Display 42 angesteuert. Über eine Ausgangsleitung 24 wird in einer Ausführung ein Aktuator 46 angesteuert zur Einflussnahme auf den Lenkwinkel des Fahrzeugs, die Beschleunigung und/oder die Verzögerung des Fahrzeugs.

Teil der in Figur 1 geschilderten Vorrichtung sind Fahrerassistenzsysteme, welche auf der Basis einer Fahrspurerkennung arbeiten, wie beispielsweise sogenannte. Spurverlassenswarner (Lane Departure Warning). Derartige Systeme sind beispielsweise aus dem eingangs genannten Stand der Technik bekannt. Bei diesen Systemen wird aus dem Bild der Videokamera der Verlauf der Fahrspurmarkierungen erkannt, die Position des eigenen Fahrzeugs bzw. die zu erwartende Position des eigenen Fahrzeugs mit diesen Fahrbahnrandmarkierungen verglichen und eine Warnung an den Fahrer bzw. einen Eingriff in die Lenkung ausgegeben, wenn das Fahrzeug die Fahrspur verlässt bzw. zu verlassen droht. Ein wesentlicher Parameter, welcher in diesem Zusammenhang ermittelt wird, ist der laterale Abstand vom Fahrzeug zur Fahrbahnrandmarkierung.

Im Zusammenhang mit der nachfolgend beschriebenen Vorgehensweise zur Fahrerzustandserkennung ist die Messung des Lenkradwinkels wesentlich. In einer einfachen Ausführungsform reicht zur Fahrerzustandserkennung die Messung des Lenkradwinkels aus. In einer anderen vorteilhaften Ausführungsform werden Informationen über den Lenkradwinkel und Informationen über die Fahrspur, insbesondere über den lateralen Abstand zu den Fahrbahnrandmarkierungen, kombiniert. Sind Systeme mit Videokameras bereits Teil der Fahrzeugausrüstung, entstehen durch diese Ergänzung keine zusätzlichen Kosten.

Ein wesentlicher Punkt bei der nachfolgend beschriebenen Fahrerzustandserkennung ist, dass zur Fahrerzustandserkennung der Verlauf wenigstens eines der oben genannten Signale überprüft wird und bei einem typischen Verhalten dieses Signals auf eine Unaufmerksamkeit des Fahrers oder beispielsweise einen Sekundenschlaf des Fahrers geschlossen wird. Beispielsweise wird der zeitliche Verlauf der Lenkwinkelgeschwindigkeit erfasst und überprüft. Ergibt sich zunächst eine Lenkwinkelgeschwindigkeit im Bereich von Null mit einer anschließenden Lenkkorrektur und einer Lenkgeschwindigkeit größer als ein bestimmter Grenzwert, so wird von einer Unaufinerksamkeit des Fahrers bzw. einer Müdigkeit des Fahrers ausgegangen. Dieses Verhalten repräsentiert eine typische Fahrerreaktion bei Unaufmerksamkeit, der schreckhaft auf sein falsches Fahren reagiert, indem er relativ stark in das Lenkrad greift und eine Lenkkorrektur vornimmt. Wesentlich dabei ist auch, dass der Fahrer vor dem plötzlichen Lenkeingriff keine wesentliche Reaktion am Lenkrad zeigt.

Eine Verbesserung der Fahrerzustandserkennung wird dadurch erreicht, dass nicht nur das Auftreten eines solchen Verhaltensmusters überprüft wird, sondern dass auch eine Messung der Häufigkeit und/oder des zeitlichen Abstandes eines solchen Verhaltsmusters überwacht wird und ein unaufmerksamer Fahrer dann angenommen wird, wenn derartige Lenkkorrekturen häufiger auftreten, als vorgegeben.

Eine weitere Verbesserung der Fahrerzustandserkennung lässt sich durch Berücksichtigung einer Fahrspurinformation erreichen. Ein weiteres Kennzeichen eines unaufmerksamen Fahrers ist ein Verlassen bzw. ein bevorstehendes Verlassen der Fahrspur. Eine derartige Situation kann mittels Auswertung des lateralen Abstandes des Fahrzeugs von der Fahrbahnmarkierung vorgenommen werden. Eine Fahrerzustandserkennung wird dadurch weiter verbessert, dass die oben beschriebene Lenkkorrektur, in einer Erweiterung unter Berücksichtigung deren Häufigkeit, bei Verlassen bzw. drohendem Verlassen der Fahrspur ermittelt und zur Fahrerzustandserkennung herangezogen wird. Ein unaufmerksamer Fahrer wird dann angenommen, wenn bei Verlassen bzw. drohendem Verlassen der Fahrspur eine entsprechende Lenkkorrektur wie oben dargestellt stattfindet, gegebenenfalls häufiger als eine vorgegebene Häufigkeit.

In den Figuren 2 und 3 sind Zeitdiagramme dargestellt, welche zwei typische Situationen zeigen, die gemäß der dargestellten Vorgehensweise zur Erkennung eines unaufmerksamen Fahrers ausgewertet werden.

Figur 2 zeigt dabei eine Situation in einem Fahrzeug, bei welchem die Unaufmerksamkeit des Fahrers beispielsweise durch Bedienung anderer Geräte wie etwa ein Radio erzeugt wurde. In Figur 2a ist der zeitliche Verlauf des Lenkwinkels, in Figur 2b der zeitliche Verlauf des lateralen Abstandes zu einer Fahrbahnrandmarkierung dargestellt. Es zeigt sich, dass zunächst geringe Lenkwinkelkorrekturen stattfinden, der laterale Abstand gemäß Figur 2b immer kleiner wird, d.h. das Fahrzeug sich kontinuierlich auf die Fahrbahnrandmarkierung zu bewegt. Zum Zeitpunkt T0 unterschreitet der laterale Abstand den Grenzwert LA0, der ein Spurverlassen bzw. ein drohendes Spurverlassen anzeigt. Dies wird vom Rechner 14 registriert. In unmittelbar zeitlichem Zusammenhang (es muss ein gewisser Kausalzusammenhang zwischen Spurverlassen und Lenkkorrektur vorliegen) mit dem Spurverlassen erfolgt dann kurz nach dem Zeitpunkt T0 eine wie oben beschriebene Lenkwinkelkorrektur, die in Figur 2a dargestellt ist.

In einer ersten Ausführung bewertet das Programm des Rechners 14 demnach einen Fahrer als unaufmerksam, wenn zunächst geringen Lenkbewegungen bis kurz nach dem Zeitpunkt T0 und eine darauf folgende starke Lenkkorrektur ermittelt wurde. Dabei wird in einer Ausführung noch die Häufigkeit, mit der eine solche Situation erkannt wird, berücksichtigt, wobei der Fahrer nur dann als unaufmerksam bewertet wird, wenn die Situation häufiger als vorgegeben auftritt. In einer weiteren Ausführung wird das Überschreiten bzw. drohende Überschreiten der Fahrbahnrandmarkierung wie in Figur 2b dargestellt ermittelt und die damit in zeitlichem Zusammenhang stehende Lenkwinkelkorrektur erkannt. Dies wird zum Bewerten eines Fahrers als unaufmerksam ausgewertet und ein entsprechendes Unaufmerksamkeitssignal erzeugt. Dieses wird bei verschiedenen Fahrerassistenzsystemen zur Veränderung deren Parameter eingesetzt oder dem Fahrer optisch und/oder akustisch und/oder haptisch und/oder olfaktorisch angezeigt. Beispielsweise wird der Warnkorridor des Spurverlassenswamers, d.h. die Grenzwerte LA0 erhöht bzw. eine zeitlich frühere Warnung vorgenommen. Bei einem adaptiven Fahrgeschwindigkeitsregler mit Abstandsmessung wird der einzuhaltende Abstand vergrößert, um dem Fahrer mehr Reaktionszeit zu geben. Sicherheitssysteme, die vor drohender Kollision warnen, warnen den Fahrer früher. Die Informationsausgabe an den Fahrer wird aufs Wesentliche reduziert.

Figur 3 zeigt eine Situation bei einem Sekundenschlaf des Fahrers. Auch hier ergibt sich die bereits anhand von Figur 2 dargestellten typischen Verhaltensweisen. Auch in Figur 3 ist waagerecht die Zeitachse, senkrecht in Figur 3a der Lenkwinkel und in Figur 3b der laterale Abstand zur Fahrbahnrandmarkierung aufgezeichnet. Auch hier überschreitet der laterale Abstand zum Zeitpunkt T0 den Grenzwert, der ein Verlassen bzw. drohendes Verlassen der Fahrspur anzeigt. Der Lenkwinkelverlauf ist wie oben skizziert dadurch charakterisiert, dass zunächst sehr geringe Lenkbewegungen erfolgen und dann im zeitlichen Zusammenhang mit dem Verlassen der Fahrspur unmittelbar nach dem Zeitpunkt T0 eine große plötzliche Lenkkorrektur stattfindet. Somit lässt sich auch ein Sekundenschlaf durch Auswertung des Lenkwinkelsignals wie oben dargestellt bzw. eine kombinierte Auswertung des Lenkwinkelsignals und des lateralen Abstands zur Fahrbahnrandmarkierung wie oben dargestellt erkennen.

Figur 4 zeigt ein Ablaufdiagramm zur Realisierung der dargestellten Vorgehensweise am Beispiel eines Rechnerprogramms. Die dort dargestellten Blöcke sind Programmmodule, wobei deren Anordnung sowie die Verbindungspfeile den Ablauf der Abarbeitung der Programmmodule im Rechner und den Informationsfluss darstellen.

Im ersten Programmmodul 100 wird der über die Zuführung 102 eingelesene Lenkwinkelwert ausgewertet. In einem bevorzugten Ausführungsbeispiel wird aus den eingelesenen Lenkwinkelwerten eine Lenkwinkeländerung abgeleitet, beispielsweise indem eine zeitliche Differentiation des Lenkwinkelsignals erfolgt. Die damit abgeleitete Lenkwinkeländerung wird mit vorgegebenen Grenzwerten verglichen. Dabei wird die Auswertung derart vorgenommen, dass das Überschreiten eines Grenzwertes dann als relevant erkannt wird, wenn die Grenzwertüberschreitung nach Ablauf einer vorbestimmten Zeitdauer mit nur geringen Lenkwinkeländerungen erkannt wurde.

In einer Ausführung wird die Häufigkeit des Erkennens einer solche Situation herangezogen. Dies erfolgt dadurch, dass beispielsweise ein Zähler in vorbestimmten Zeitabständen dekrementiert wird, mit jeder erkannten Lenkkorrektursituation inkrementiert, so dass mittels des Zählers eine Häufigkeit von Lenkwinkelkorrekturen angebbar ist. Überschreitet diese Lenkkorrekturhäufigkeit (Zählerstand) einen vorbestimmten Wert, wird ein Signal erzeugt, welches die Erkennung gehäufter plötzlicher Lenkkorrekturen repräsentiert. Ferner oder alternativ dazu wird bei Überschreiten eines vorgegebenen Amplitudenwertes der Lenkkorrektur im Rahmen der wie oben dargestellten Situation ein entsprechendes Signal ausgegeben. Das oder die genannten Signale werden dann über die Verbindung 104 zu dem Modul "Müdigkeitserkennung" 106 geführt.

Ein weiteres Programmmodul 108 stellt ein fahrspurbasiertes Fahrerassistenzsystem, beispielsweise einen Fahrspurverlassenswarner dar. Dieses Modul ermittelt beispielsweise aufgrund von über die Verbindung 110 zugeführten Bildern der Umgebung des Fahrzeugs den Verlauf der Fahrspur und die Position des Eigenfahrzeugs darin, insbesondere den lateralen Abstand des Fahrzeugs zur Fahrbahnrandmarkierung. Je nach Ausführung erkennt das Modul 108 durch Vergleich des lateralen Abstandes mit vorgegebenen Grenzwerten die Situation des Spurverlassens bzw. des drohenden Spurverlassens, und stellt dieses Einzelereignis und/oder analog zur obigen Darstellung in Bezug auf den Lenkwinkel die Häufigkeit von Spurverlassungen bzw. drohenden Spurverlassungen. In einer anderen Ausführung wird beispielsweise die Standardabweichung des lateralen Abstandes ermittelt und daraus ein Maß für das Spurverhalten des Fahrers, beispielsweise gut/schlecht, abgeleitet. Eine oder mehrere dieser Informationen werden über die Verbindung 112 dann dem Modul Müdigkeitserkennung 106 zugeführt.

Das Modul Müdigkeitserkennung besteht im wesentlichen aus den Modulen 114 (Analyse der Ergebnisse des Lenkwinkelmoduls 100), 116 (Analyse des Ergebnisses des Moduls 108) und 118 (Gesamtanalyse beider Ergebnisse). Die Informationen des Moduls 100 werden dem Modul 114 und dem Modul 118, die Informationen des Moduls 108 dem Modul 116 und 118 zugeführt. Im Modul 114 wird überprüft, ob die ermittelten Häufigkeiten von Lenkkorrekturen oder die vorgenommene Lenkkorrektur einen Grad erreicht hat, welcher auf einen unaufmerksamen Fahrer schließen lässt. Dies ist der Fall, wenn beispielsweise die Häufigkeit der Lenkkorrekturen vorgegebene Grenzwerte übersteigt, ein Lenkmuster aufgetreten ist, welches einer plötzlichen Lenkkorrektur entspricht, etc. Diese Information wird einem Modul 120 zugeführt, in der die verschiedenen Analysen bewertet und gewichtet werden und auf dieser Basis ein Ausgangssignal über den Fahrerzustand erzeugt wird.

Entsprechend dem Modul 114 arbeitet das Modul 116, wobei die ermittelten Informationen vom Modul 108 hinsichtlich des Spurverhaltens des Fahrers ausgewertet werden. Gibt das Spurverhalten oder die Häufigkeiten bzw. Schwere der Spurverlassungen Anlass, von einer Unaufmerksamkeit des Fahrers auszugehen, übermittelt das Modul 116 diese Information an das Modul 120. Das Modul 116 ermittelt eine mögliche Unaufmerksamkeit an einer großen Häufigkeit von Spurverlassungen, an einem schlechten Spurverhalten, etc.

Das Modul 118 wertet beide Informationen aus. Typisches Beispiel ist, dass von einer Unaufmerksamkeit des Fahrers ausgegangen wird, wenn in etwa zeitgleich mit einer Spurverlassung ein Lenkmuster auftritt, welches einem plötzlichen Lenkeingriff entspricht (siehe obige Darstellung). Ist dies der Fall, wird das Modul 118 eine Information an das Modul 120 ausgeben, in welchem eine Unaufmerksamkeit des Fahrers angenommen wird.

Das Modul 120 bewertet und gewichtet die verschiedenen Analyseergebnisse. Liegt beispielsweise eine Unaufmerksamkeitsinformation des Moduls 118 vor, welche in der Regel sehr hoch bewertet wird, wird über den Ausgang 122 der Fahrer informiert und/oder über den Ausgang 124 Fahrerassistenzsysteme oder Fahrerinformationssysteme angepasst.

Entsprechend wird beispielsweise bei einer Fahrermüdigkeit aufgrund der Analyse des Moduls 114 und bei einer zeitlich nicht zu sehr in der Vergangenheit liegenden Fahrerunaufmerksamkeitserkennung auf der Basis der Spurdaten ein Ausgangssignal erzeugt. In einer Ausführungsform wird allein auf der Basis des Lenkwinkelsignals entschieden, ob ein unaufmerksamer Fahrer vorliegt oder nicht.

Über die Leitungen 104 und 112 werden Signale transportiert, die einzeln in den Modulen 114 und 116 ausgewertet werden (siehe oben Extraktion von Merkmalen). Das Modul 118 ermöglicht die Extraktion von Gesamtmerkmalen beider ,Rohsignale'. Z.B. würde man die Information über mögliches zick-zack-Fahren des Autofahrers verlieren, wenn im Modul 116 nur das Merkmal ,Spurverlassen' extrahieren würde. Das Modul 118 wertet daher die Rohsignale Lenkwinkel und Spurposition gemeinsam aus und kann so z.B. bewusstes zick-zack-Fahren erkennen. Dies ist bei einzelner Auswertung der Rohsignale nicht möglich.

In einer bevorzugten Ausführung liefern die Module 114, 118 und 116 aufbereitete Merkmale, mit denen jeweils einzeln bereits eine gute Aussage zur Müdigkeitserkennung getroffen werden kann. Die Verfügbarkeit all dieser Features ermöglicht aber auch eine gemeinsame Auswertung mit Gewichtung der Einzelmerkmale um u.a. Einzelmerkmale auf Plausibilität zu prüfen und die Gesamtauswertung robuster zu gestalten. Diese Auswertung kann z.B. auf Basis linearer oder nichtlinearer Modelle mit Hilfe von festen oder angepassten Grenzwerten erfolgen. Eine andere Möglichkeit liegt in der Bewertung der Gesamtmerkmale im Fuzzy-Bereich oder aber in der Auswertung durch ein neuronales Netz. Für beide letztgenannten Möglichkeiten ist es sinnvoll, das System auf den individuellen Fahrer zu trainieren. Hierzu ist es denkbar, dass das System zunächst mit den Standardmodellen beginnt (linear oder nichtlinear) und über einen längeren Zeitraum parallel die Fuzzy- oder Neuronale-Netz Auswertung trainiert. Über die Auswertung der Merkmale erhält das Modul 120 eine Rückmeldung über das geänderte Fahrverhalten auf Basis der vorhergehenden Ausgaben über 122 und 124 (verbessert die Ergebnisse des Trainierens).

## Patentansprüche

1. Verfahren zur Fahrerzustandserkennung, wobei ein den Fahrerzustand signalisierendes Signal erzeugt wird in Abhängigkeit eines Signals, welches durch den Fahrerzustand charakteristisch beeinflusst wird, wobei der zeitliche Verlauf dieses Signals erfasst wird und wenigstens bei Vorliegen eines typischen zeitlichen Verlaufs des Signals eine den Fahrerzustand als unaufmerksam darstellendes Signal erzeugt wird, **dadurch gekennzeichnet, dass** auf einen unaufmerksamen Fahrer geschlossen wird und das entsprechende Signal erzeugt wird, wenn in direktem zeitlichen Zusammenhang mit einem Spurverlassen bzw. einem drohenden Spurverlassen Lenkkorrekturen vorgenommen werden, derart, dass die Lenkwinkeländerung nach einer Phase geringer Änderung ansteigt.

2. Verfahren nach Anspruch 1, **dadurch gekennzeichnet, dass** ein unaufmerksamer Fahrer angenommen wird und ein entsprechendes Signal erzeugt wird, wenn Lenkkorrekturen mit einer vorgegebenen Häufigkeit erkannt werden.

3. Verfahren nach einem der vorhergehenden Ansprüche, **dadurch gekennzeichnet, dass** ein unaufmerksamer Fahrer auf der Basis eines Spurverhaltens, insbesondere des lateralen Abstandes des Fahrzeugs zur Fahrspur, ermittelt wird und ein entsprechendes Signal erzeugt wird.

4. Verfahren nach einem der vorhergehenden Ansprüche, **dadurch gekennzeichnet, dass** zur Fahrerzustandserkennung das Lenkverhalten und das Spurverhalten jeweils einzeln und gemeinsam ausgewertet werden und die Ergebnisse unterschiedlich gewichtet in die Fahrerzustanderkennung eingehen.

5. Vorrichtung zur Fahrerzustandserkennung, mit einer Rechnereinheit (14), welche einen Fahrerzustand charakterisierendes Signal auswertet und einen Fahrerzustand charakterisierendes Signal erzeugt, wobei die Rechnereinheit (14) derart ausgebildet ist, dass der zeitliche Verlauf des Signals überprüft wird und ein Fahrerzustandssignal wenigstens bei einem charakteristischem zeitlichen Signalverlauf erzeugt wird, **dadurch gekennzeichnet, dass** die Rechnereinheit (14) ferner derart ausgebildet ist, dass ein unaufmerksamer Fahrer angenommen wird und das entsprechende Signal erzeugt wird, wenn in direktem zeitlichen Zusammenhang mit einem Spurverlassen bzw. drohendem Spurverlassen Lenkkorrekturen vorgenommen werden, derart, dass die Lenkwinkeländerung nach einer Phase geringer Änderung plötzlich ansteigt.

## Claims

1. Method for detecting the state of a driver, wherein a signal which signals the state of the driver is generated as a function of a signal which is influenced characteristically by the state of the driver, wherein the time profile of this signal is registered and a signal which represents the state of the driver as inattentive is generated at least when a typical time profile of the signal is present, **characterized in that** it is concluded that a driver is inattentive and the corresponding signal is generated if steering corrections are performed in direct chronological relationship with departure from a lane or imminent departure from a lane, such that the change in the steering angle increases after a phase of small change.

2. Method according to Claim 1, **characterized in that** it is assumed that a driver is inattentive and a corresponding signal is generated if steering corrections are detected with a predefined frequency.

3. Method according to one of the preceding claims, **characterized in that** it is determined that a driver is inattentive on the basis of a lane-keeping behaviour, in particular of the lateral distance of the vehicle from the lane, and a corresponding signal is generated.

4. Method according to one of the preceding claims, **characterized in that** the steering behaviour and the lane-keeping behaviour are each evaluated individually and jointly for the purpose of detecting the state of the driver, and the results are included in the detection of the state of the driver with different weighting.

5. Device for detecting the state of the driver, having a computer unit (14) which evaluates a signal which characterizes a state of a driver, and generates a signal which characterizes a state of a driver, wherein the computer unit (14) is embodied in such a way that the time profile of the signal is checked and a driver state signal is generated at least in the case of a characteristic time signal profile, **characterized in that** the computer unit (14) is also embodied in such a way that it is assumed that a driver is inattentive and the corresponding signal is generated if steering corrections are performed in direct chronological relationship with departure from a lane or imminent departure from a lane such that the change in the steering angle increases suddenly after a phase with a small change.

## Revendications

1. Procédé pour détecter l'état d'un conducteur, dans lequel un signal signalant l'état du conducteur est généré en fonction d'un signal qui est influencé de façon caractéristique par l'état du conducteur, la variation dans le temps de ce signal étant enregistrée et un signal représentant l'état du conducteur comme inattentif étant généré au moins en cas de présence d'une variation dans le temps caractéristique du signal, **caractérisé en ce qu'**on conclut à la présence d'un conducteur inattentif et **en ce que** le signal correspondant est généré lorsque des corrections de braquage sont effectuées dans un rapport de temps direct avec le fait de quitter une voie ou le risque de quitter une voie, de telle sorte que la variation de l'angle de braquage augmente après une phase de faible variation.

2. Procédé selon la revendication 1, **caractérisé en ce que** la présence d'un conducteur inattentif est supposée et **en ce qu'**un signal correspondant est généré lorsque des corrections de braquage avec une fréquence prédéfinie sont identifiées.

3. Procédé selon l'une quelconque des revendications précédentes, **caractérisé en ce que** la présence d'un conducteur inattentif est déterminée sur la base d'un comportement sur la voie, en particulier de la distance latérale entre le véhicule et la voie et **en ce qu'**un signal correspondant est généré.

4. Procédé selon l'une quelconque des revendications précédentes, **caractérisé en ce que**, pour identifier l'état du conducteur, le comportement de conduite et le comportement sur la voie sont analysés à chaque fois individuellement et ensemble, et les résultats sont pondérés de façon différente et intégrés dans l'identification de l'état du conducteur.

5. Dispositif pour détecter l'état d'un conducteur, comprenant un ordinateur (14), qui analyse un signal caractérisant l'état du conducteur et génère un signal caractérisant l'état du conducteur, l'ordinateur (14) étant conçu de telle sorte que la variation dans le temps du signal est contrôlée et qu'un signal de l'état du conducteur est généré au moins dans le cas d'une variation dans le temps caractéristique du signal, **caractérisé en ce que** l'ordinateur (14) est conçu également de telle sorte que la présence d'un conducteur inattentif est supposée et **en ce que** le signal correspondant est généré lorsque des corrections de braquage sont effectuées dans un rapport de temps direct avec le fait de quitter une voie ou le risque de quitter une voie, de sorte que la variation de l'angle de braquage augmente brusquement après une phase de faible variation.
